# EUROPEAN PATENT SPECIFICATION

(11) **EP 0 379 946 B1**
(45) Date of publication and mention of the grant of the patent: **15.12.1993**
(21) Application number: 90100867.2
(22) Date of filing: 17.01.1990
(51) Int. Cl.: G01M 3/22, G21C 17/06

(54) **Nuclear fuel rod helium leak inspection apparatus and method**
Verfahren und Vorrichtung zur He-Leckprüfung von Kernbrennstäben
Méthode et appareil pour inspecter, à l'hélium, les fuites des barres de combustible nucléaire

(30) Priority: 25.01.1989 US 301414
(43) Date of publication of application: 01.08.1990
(73) Proprietor: WESTINGHOUSE ELECTRIC CORPORATION, Pittsburgh Pennsylvania 15222 (US)
(72) Inventor: Ahmed, Hassan Juma, Irmo, South Carolina 29063 (US)
(74) Representative: Gallo, Wolfgang, Dipl.-Ing. (FH)

(56) References cited:
- FR-A- 2 402 201
- GB-A- 2 068 166
- GB-A- 2 173 006
- US-A- 3 247 706
- US-A- 4 136 553
- US-A- 4 260 886
- US-A- 4 722 219
- US-A- 4 754 638

## Description

The present invention relates generally to fuel rods for a nuclear reactor and, more particularly, to an apparatus and method for inspecting or testing the integrity of nuclear fuel rods which have been filled with helium under pressure and sealed.

As well known, pressurized water nuclear reactors are more efficient when operated at higher temperatures and pressures. At higher water pressure, more heat per unit weight of water can be derived from the fuel elements or rods in the reactor core because the water can reach a higher temperature and thereby absorb more energy before reaching boiling point at those pressures.

The useful life of the fuel rods can be prolonged if the fuel rods are internally pressurized to withstand the higher external coolant or water pressures in the reactor core and to prevent tube collapse. Thus, during fabrication of fuel rods, it is accepted practice to pressurize the fuel rod with an inert gas, such as helium. Typically, a gas orifice is provided in one of the end plugs of the fuel rod for this purpose. After pressurization, the orifice is welded closed to seal the fuel rod.

In order to ensure weld and fuel rod tube integrity, an accepted procedure in quality control is to inspect or test fuel rods for helium leaks. The common method in use to test for helium leaks is to load a number of fuel rods in a tray and to slide the loaded tray into a closed ended vacuum chamber. After a sufficient level of vacuum is achieved, the vacuum chamber is connected in communication with a test mechanism and is sampled for helium by mass spectrometry. Other similar testing methods of the prior art are disclosed in U.S. Patents No. 3,247,706 and No. 4,117,333, and in French Patent No. 2,402,201.

All of these prior-art testing methods have drawbacks. One drawback is that the testing typically involves a sequence of manual operations which are slow and introduce a risk of operator error. Another drawback is that the helium leak detecting mechanism typically employed is referenced to a zero helium standard, which means that if no helium is detected in the vacuum chamber, the conclusion of the test is that there is no helium leak in the fuel rods being tested; yet, no safeguard is provided to distinguish a detection of zero helium caused by an equipment malfunction from one caused by a valid "no leak" condition of the fuel rods.

It is the principal object of the invention to provide an improved manner of inspecting and testing nuclear fuel rods for helium leaks in order to enhance efficiency and ensure reliability of testing procedures and results.

The invention, from one aspect thereof, accordingly resides in an inspection method as characterized in claim 1 or any of the claims subordinate thereto.

The invention, from another aspect thereof, resides in an inspection apparatus as characterized in claim 6 or any of the claims subordinate thereto.

More particularly, the invention utilizes a test chamber which is open at opposite ends thereof, and each of which open ends has associated therewith a cover and a mechanism for moving the cover into and from a position closing the corresponding end of the test chamber. Utilized in conjunction with the test chamber are a tandem arrangement of conveyors for transporting fuel rods into, through, and from the test chamber; and helium detecting means referenced to a positive known helium leak rate standard, rather than a zero helium standard, which is provided by maintaining a constant helium leak into the test chamber at a known predetermined minimum rate.

Employing such positive leak rate standard enables the operator of the inspection equipment to discover and recognize equipment malfunction when the helium detection response is near zero, and thereby to prevent the operator from misinterpreting such a response as an "accept" signal. More particularly, an "accept" or "reject" decision is now based upon two set points of a leak rate detecting device or meter. If the response is below the lower one of the two set points, i.e. below the set point representing the minimum response to the constantly open leak standard in the test, an "equipment fault" signal is issued; if the response falls between the two set points, an "accept" signal is issued, and the fuel rods under test are conveyed out of the test chamber and to the next inspection station; and if the response is beyond or above the upper set point, a "reject" signal is issued, and the fuel rods under test will remain in the test chamber to await appropriate action to be taken by the operator. This logical sequence removes operator interference from the inspection process, and it allows full integration of the inspection process into a complete material handling system.

A preferred embodiment of the invention will now be described, by way of example only, with reference to the attached drawings, in which:
Figure 1 is a foreshortened and fragmentary side elevational view of an inspection apparatus embodying the invention;
Figure 2 is a top plan view of the inspection apparatus shown in Figure 1; and
Figure 3 is a block diagram of the helium leak inspection method of the invention.

In the following description, like reference characters designate like or corresponding parts throughout the several views of the drawings, and terms such as "forward", "rearward", "left", "right", "upwardly", "downwardly", and the like are employed as words of convenience and not to be construed as limiting terms.

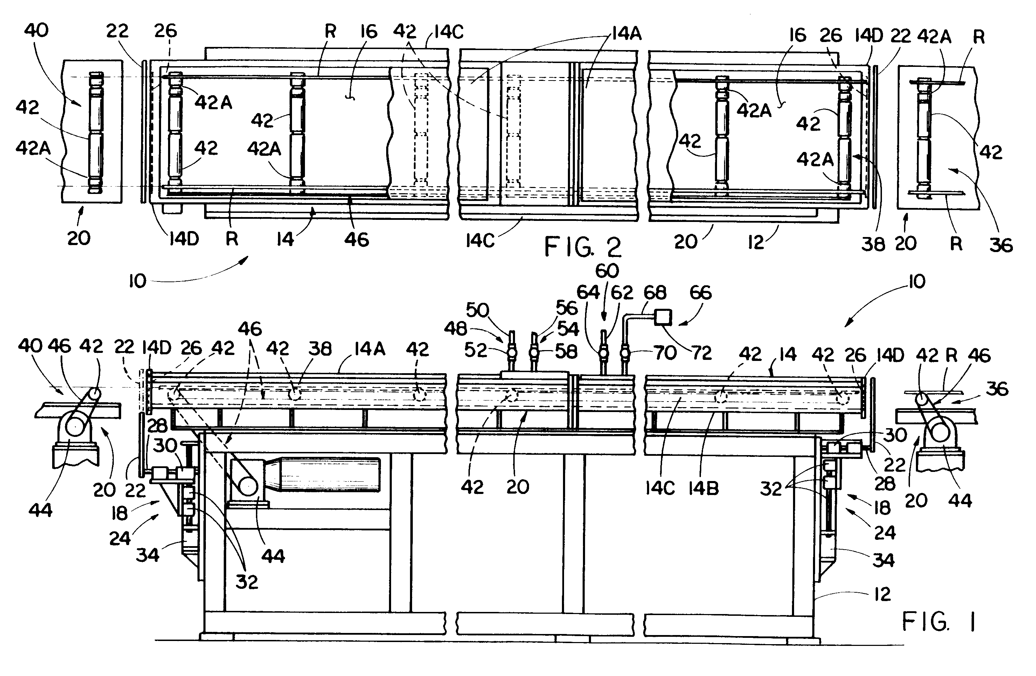

Referring now to the drawings, and particularly to Figures 1 and 2, the inspection apparatus illustrated therein and generally designated with numeral 10 is for testing nuclear fuel rods R for helium leaks, and it comprises a frame 12, and an elongate rectangular box-like structure 14 supported on the frame and defining a test chamber 16. The structure 14 is formed by a closed top 14A, a closed bottom 14B, a pair of closed opposite sides 14C, and a pair of open opposite ends 14D.

The inspection apparatus 10 also includes test chamber closure means 18 and fuel rod transport means 20. The test chamber closure means 18 are provided adjacent each of the opposite open ends 14D of the box-like structure 14, and are operable to open and close the test chamber 16 at its respective ends. More particularly, the test chamber closure means 18 include a pair of rectangular plate-like end covers 22, and mechanisms 24 associated with the covers. The end covers 22 are adapted to seat against seal rings 26 on the respective open ends 14D of the box-like structure 14 so as to sealably close the opposite ends of the test chamber 16.

The actuatable mechanisms 24 mounted on the opposite ends of the frame 12 support the end covers 22, and each mechanism 24 includes a horizontal arrangement 28 of bearings and rods movably supporting the associated end cover 22, and a horizontal pneumatic cylinder 30 operable to move the end cover 22 horizontally toward and away from the corresponding end 14D of the box-like structure 14. Each mechanism 24 includes further a vertical arrangement 32 of bearings and rods movably supporting the horizontal arrangement 28 of bearings and rods, and a vertical pneumatic cylinder 34 operable to move the associated horizontal arrangement 28, and thereby the associated end cover 22, vertically between an upper position adjacent the structure ends 14D and a lower position remote therefrom so as to close and open, respectively, the corresponding end of the test chamber 16.

The fuel rod transport means 20 for transporting a plurality, e.g., twenty five, of side-by-side positioned nuclear fuel rods R into, through, and from the test chamber 16 includes an end-to-end arrangement of conveyors usually, a first conveyor 36 mounted upstream of the entry end of the test chamber 16 for transporting the fuel rods R into the chamber; a second conveyor 38 mounted on the bottom 114B of the structure 14 and located within the test chamber 16 for receiving the fuel rods R from the first conveyor 36, transporting the fuel rods through the chamber, and supporting the fuel rods in the chamber during the test; and a third conveyor 40 mounted downstream of the exit end of the test chamber 16 for transporting the fuel rods from the test chamber.

The conveyors 36-40 are substantially identical in their arrangement of components, each of them including a plurality of parallel spaced rollers 42 having thereon a series of circumferential grooves 42A. The grooves 42A of one roller 42 are aligned with corresponding grooves 42A of the other rollers 42 so as to support fuel rods R at spaced locations therealong between their ends, as seen from Figure 2. The transport means 20 includes a motor 44 and a pulley and drive chain arrangement 46 drivingly coupled with the rollers 42 of each conveyor 36-40 and operable to rotate them.

As schematically shown in Figure 1, the inspection apparatus 10 also includes means 48 connected in communication with the box-like structure 14 and operable to purge the test chamber 16 with a gas, in the form of liquid nitrogen, when the opposite ends of the chamber 16 are opened, the purging means 48 including a conduit 50 and control valve 52 connected to a source of liquid nitrogen (not shown). The apparatus 10 also includes helium supply means 54 connected in communication with the box-like structure 14 and operable to constantly leak helium at a predetermined positive, known value into the test chamber 16, the helium supply means 54 including a conduit 56 and a control valve 58 connected to a source of helium (not shown). Furthermore, the apparatus 10 includes vacuum means 60 connected in communication with the box-like structure 14 and operable to produce a predetermined vacuum condition within the test chamber 18 when the opposite ends thereof are closed, the vacuum means 60 including a conduit 62 and a control valve 64 connected to a vacuum pressure producing source (not shown).

Finally, the inspection apparatus 10 includes means 66 connected in communication with the box-like structure 14 and operable to sample the atmosphere within the closed test chamber 16 and to measure the helium in the atmosphere of the chamber, the sampling and measuring means 66 including a conduit 68, a control valve 70, and a test mechanism 72 connected thereto and incorporating equipment such as a leak rate meter and a mass spectrometer. In accordance with the invention, the value of the helium measured by the test mechanism 72 is compared with preset or preselected minimum and maximum helium values for making a decision about the conditions of the fuel rods R in the test chamber 18 and thereby determining whether to "accept" or "reject" the respective fuel rods R. If the measured helium value is below the preset minimum helium value (the positive helium leak rate standard), a malfunction in the inspection apparatus 10 itself is indicated since the testing is carried out with a constant leaking of helium in the test chamber 16 at the minimum value. If the measured helium value is above the preset maximum helium value, the existence of a helium leak from the fuel rods is indicated since the source of the leak has to be something more than just the constant leaked helium. Finally, if the measured helium value is between the minimum and maximum helium values, the absence of a helium leak from the fuel rods is indicated.

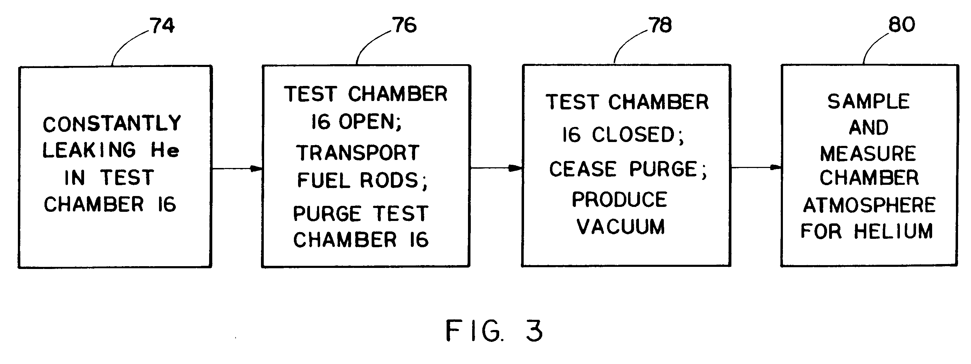

Turning now to Figure 3, there is shown a block flow diagram of the procedures involved in the inspecting and testing method according to the invention. As represented by block 74, the procedures are carried out as helium is constantly leaked at a predetermined positive, known rate or value into the test chamber 16 by appropriately setting the open condition of the control valve 58. As represented by block 76, when the test chamber 16 is open at its opposite ends by appropriate actuation of the mechanisms 24 for transporting previously tested fuel rods from the chamber and for transporting a new batch of fuel rods into the chamber through the respective open ends thereof, the chamber is purged with liquid nitrogen, through operation of control valve 52, in order to maintain it in a moisture-free condition. When the chamber then is closed, the purging operation is terminated through closure of the valve 52.

As represented by block 78, when the test chamber 16 is closed at its opposite ends through appropriate actuation of the mechanisms 24, the control valve 64 is operated to produce a predetermined vacuum condition within the test chamber. Preferably, the vacuum is pulled down to five microns of mercury. The leakage of helium in the chamber 16 continues as the vacuum condition is being produced. Once the vacuum condition is reached and the control valve 64 is then closed, the control valve 70 is operated.

As represented by block 80, when the control valve 70 is opened, the atmosphere within the test chamber 16 is sampled and measured for its helium content by the test mechanism 72. The meanings of the various levels of helium measurements have been described above. If a malfunction in the inspection apparatus 10 is indicated by the measured value, the operator is alerted so that appropriate action can be taken. The tested lot of fuel rods is not automatically released from the chamber. If the existence of a helium leak from the fuel rods is indicated by the measured value, the operator is again alerted so that appropriate action can be taken. Again, the tested lot of fuel rods is not automatically released from the chamber. However, if the absence of a helium leak from the fuel rod is indicated by the measured value, the fuel rods are automatically released from the chamber and the next batch is loaded. In the situation where the measured helium value is above the preset maximum helium value, and in order to ensure that the first measurement was not erroneous, the sampling and measuring is repeated a second time before the final decision is made that a helium leak from the fuel rods is occurring.

## Claims

1. An inspection method for testing nuclear fuel rods (R) for helium leaks, characterized by the steps of: constantly leaking helium at a predetermined known rate into a test chamber (16) containing at least one fuel rod (R); and sampling the atmosphere within said chamber (16) and measuring the helium in said atmosphere such that a measured helium value (i) below a preset minimum helium value indicates a malfunction in the inspection apparatus, (ii) above a preset maximum helium value indicates the existence of a helium leak from the fuel rod (R), and (iii) between said minimum and maximum helium values indicates the absence of a helium leak from the fuel rod (R).

2. The inspection method according to claim 1, characterized in that prior to said sampling and measuring, the test chamber (16) is purged with a preselected gas.

3. The inspection method according to claim 2, characterized in that said preselected gas is nitrogen.

4. The inspection method according to claim 1, 2 or 3, characterized by producing a predetermined vacuum condition within the test chamber (10) prior to said sampling and measuring.

5. The inspection method according to claim 1, 2, 3 or 4, characterized in that said sampling and measuring is repeated if a helium value above said preset maximum helium value is measured.

6. An inspection apparatus (10) for testing nuclear fuel rods (R) for helium leaks,characterized by the combination comprising a test chamber (16) for receiving at least one nuclear fuel rod (R); means (54) for constantly leaking helium at a predetermined known rate into said test chamber (16); and means (66) for sampling the atmosphere within said chamber (16) and measuring the helium in the atmosphere such that a measured helium value (i) below a preset minimum helium value indicates a malfunction in the inspection apparatus, (ii) above a preset maximum helium value indicates the existence of a helium leak from the fuel rod, and (iii) between said minimum and maximum helium values indicates the absence of a helium leak from the fuel rod.

7. The inspection apparatus (10) according to claim 6, characterized by means (60) for producing a predetermined vacuum condition within said test chamber (10) prior to operating the sampling and measuring means (66).

8. The inspection apparatus (10) according to claim 6 or 7, characterized in that the sampling and measuring means (66) is a helium detecting device (72) which is referenced to a positive known helium leak rate standard.

9. The inspection apparatus (10) according to claim 6, 7 or 8, characterized by means (20) for transporting at least one nuclear fuel rod (R) at a time into, through, and from said test chamber (16).

10. The inspection apparatus (10) according to claim 9, characterized in that the transporting means (20) comprises a first conveyor (36) for transporting the fuel rod (R) into said chamber (16), a second conveyor (38) disposed within the test chamber (16) for supporting the fuel rod (R) in and transporting it through said test chamber (16), and a third conveyor (40) for transporting the fuel rod (R) from the test chamber (16).

11. The inspection apparatus (10) according to claim 10, characterized in that said first, second, and third conveyors (36, 38, 40) are arranged end-to-end with respect to each other.

12. The inspection apparatus (10) according to any one of claims 6 to 11, characterized in that the test chamber (16) is an elongate structure having open opposite ends each of which has associated therewith means (18) operable to close and to open the associated end of said test chamber (16).

13. The inspection apparatus (10) according to claim 12, characterized in that the means (18) for opening and closing the ends of the test chamber (16) comprise a pair of end covers (22) sealably fitting said opposite ends of said test chamber (16), and mechanisms (24) operable for moving said end covers (22) to open and closed positions thereof with respect to the respective opposite ends of the test chamber (16).

14. The inspection apparatus (10) according to claim 12 or 13, characterized by means (48) for purging said test chamber (16) with a preselected gas when said opposite ends of the test chamber (16) are opened.

## Patentansprüche

1. Prüfverfahren zum Testen von Kernbrennstäben (R) auf Heliumlecks, gekennzeichnet durch die Schritte: Konstantes Einsickernlassen von Helium mit einem vorgegebenen bekannten Durchsatz in eine Testkammer (16), die mindestens einen Brennstab (R) enthält, und Probenahme der Atmosphäre in der Kammer (16) und Messen des Heliums in dieser Atmosphäre in der Weise, daß ein gemessener Heliumwert (i) unterhalb eines eingestellten minimalen Heliumwerts eine Fehlfunktion in der Prüfeinrichtung anzeigt, (ii) oberhalb eines eingestellten maximalen Heliumwerts die Existenz eines Heliumlecks in dem Brennstab (R) anzeigt, und (iii) zwischen den minimalen und maximalen Heliumwerten das Nichtvorhandensein eines Heliumlecks in dem Brennstab (R) anzeigt.

2. Prüfverfahren nach Anspruch 1, dadurch gekennzeichnet, daß vor der Probenahme und der Messung die Testkammer (16) mit einem ausgewählten Gas ausgespült wird.

3. Prüfverfahren nach Anspruch 2, dadurch gekennzeichnet, daß das ausgewählte Gas Stickstoff ist.

4. Prüfverfahren nach Anspruch 1, 2 oder 3, gekennzeichnet durch Erzeugen eines vorgegebenen Vakuumzustands in der Testkammer (10) vor der Probenahme und Messung.

5. Prüfverfahren nach Anspruch 1, 2, 3 oder 4, dadurch gekennzeichnet, daß die Probenahme und Messung wiederholt wird, wenn ein Heliumwert oberhalb des eingestellten maximalen Heliumwerts gemessen wird.

6. Prüfeinrichtung zum Testen von Kernbrennstäben (R) auf Heliumlecks, gekennzeichnet durch die Kombination einer Testkammer (16) zur Aufnahme mindestens eines Kernbrennstabs (R), Mitteln (54) zum konstanten Einsickernlassen von Helium mit einem vorgegebenen bekannten Durchsatz in die Testkammer (16), und Mitteln (16) zum Probenehmen der Atmosphäre in der Kammer (16) und Messen des Heliums in der Atmosphäre in der Weise, daß ein gemessener Heliumwert (i) unterhalb eines eingestellten minimalen Heliumwerts eine Fehlfunktion in der Prüfeinrichtung anzeigt, (ii) oberhalb eines eingestellten maximalen Heliumwerts die Existenz eines Heliumlecks in dem Brennstab anzeigt, und (iii) zwischen den minimalen und maximalen Heliumwerten das Nichtvorhandensein eines Heliumlecks in dem Brennstab anzeigt.

7. Prüfeinrichtung (10) nach Anspruch 6, gekennzeichnet durch Mittel (60) zum Erzeugen eines vorgegebenen Vakuumzustands innerhalb der Testkammer (10) vor Betätigung der Probenahme- und Meßmittel (66).

8. Prüfeinrichtung (10) nach Anspruch 6 oder 7, dadurch gekennzeichnet, daß die Probenahme- und Meßmittel (66) ein Heliumnachweisgerät (72) ist, das auf einen positiven bekannten Heliumleckratenstandard geeicht ist.

9. Prüfeinrichtung (10) nach Anspruch 6, 7 oder 8, gekennzeichnet durch Mittel (20) zum Transportieren jeweils mindestens eines Kernbrennstabs (R) in, durch und aus der Testkammer (16).

10. Prüfeinrichtung (10) nach Anspruch 9, dadurch gekennzeichnet, daß die Transportmittel (20) einen ersten Förderer (36) zum Transportieren des Brennstabs (R) in die Kammer (16), einen in der Testkammer (16) angeordneten zweiten Förderer (38) zum Unterstützen des Brennstabs (R) in der Testkammer (16) und zu dessen Transport durch die Testkammer, und einen dritten Förderer (40) zum Transportieren des Brennstabs (R) aus der Testkammer (16) umfassen.

11. Prüfeinrichtung (10) nach Anspruch 10, dadurch gekennzeichnet, daß der erste, der zweite, und der dritte Förderer (36, 38, 40) hintereinander angeordnet sind.

12. Prüfeinrichtung (10) nach einem der Ansprüche 6 bis 11, dadurch gekennzeichnet, daß die Testkammer (16) eine langgestreckte Konstruktion mit beiseitigen offenen Enden aufweist, denen im Sinne eines Schließens und Öffnens des betreffenden Endes der Testkammer (16) betätigbare Mittel (18) zugeordnet sind.

13. Prüfeinrichtung (10) nach Anspruch 12, dadurch gekennzeichnet, daß die Mittel (18) zum Öffnen und Schließen der Enden der Testkammer (16) zwei Stirndeckel (22) aufweisen, die dicht mit den beiderseitigen Enden der Testkammer (16) zusammenwirken, und im Sinne einer Bewegung der Stirndeckel (22) in Offen- und Schließstellungen mit Bezug auf die beiderseitigen Enden der Testkammer (16) betätigbare Mechanismen (24) aufweisen.

14. Prüfeinrichtung (10) nach Anspruch 12 oder 13, gekennzeichnet durch Mittel (48) zum Ausspülen der Testkammer (16) mit einem ausgewählten Gas, wenn die beiderseitigen Enden der Testkammer (16) geöffnet sind.

## Revendications

1. Méthode d'inspection pour examiner à l'hélium les fuites de barres de combustible nucléaire (R), caractérisée par les étapes : infiltration constante d'hélium à un débit prédéterminé, connu, dans une chambre d'essai (16) contenant au moins une barre de combustible (R) ; et prise d'échantillon de l'atmosphère à l'intérieur de la chambre (16) et mesure de l'hélium dans ladite atmosphère de sorte qu'une valeur d'hélium (i) mesurée au-dessous d'une valeur d'hélium minimale pré-réglée indique un dysfonctionnement dans l'appareil d'inspection, (ii) au-dessus d'une valeur d'hélium maximale pré-réglée l'existence d'une fuite d'hélium de la barre de combustible (R), et (iii) entre lesdites valeurs d'hélium minimale et maximale l'absence d'une fuite d'hélium de la barre de combustible (R).

2. Méthode d'inspection selon la revendication 1, caractérisée en ce qu'avant la prise d'échantillon et la mesure, la chambre d'essai (16) est purgée à l'aide d'un gaz pré-sélectionné.

3. Méthode d'inspection selon la revendication 2, caractérisée en ce que le gaz pré-sélectionné est de l'azote.

4. Méthode d'inspection selon les revendications 1, 2 ou 3, caractérisée par la production d'un état de vide prédéterminé dans la chambre d'essai (10) avant lesdites prise d'échantillon et mesure.

5. Méthode d'inspection selon les revendications 1, 2, 3 ou 4, caractérisée en ce que lesdites prise d'échantillon et mesure sont répétées si une valeur d'hélium au-dessus de la valeur maximale d'hélium pré-réglée est mesurée.

6. Appareil d'inspection (10) pour examiner à l'hélium les fuites d'hélium de barres de combustible nucléaire (R), caractérisé par la combinaison comportant une chambre d'essai (16) pour recevoir au moins une barre de combustible nucléaire (R) ; des moyens (54) pour laisser constamment infiltrer de l'hélium à un débit prédéterminé, connu, dans ladite chambre d'essai (16) ; et des moyens (66) pour la prise d'échantillon de l'atmosphère dans ladite chambre d'essai (16) et mesurer l'hélium dans l'atmosphère de sorte qu'une valeur d'hélium (i) mesurée au-dessous d'une valeur d'hélium pré-réglée indique un dysfonctionnement de l'appareil d'inspection, (ii) au-dessus d'une valeur d'hélium maximale pré-réglée l'existence d'une fuite d'hélium de la barre de combustible, et (iii) entre lesdites valeur minimale et maximale l'absence d'une fuite d'hélium de la barre de combustible.

7. Appareil d'inspection (10) selon la revendication 6, caractérisé par des moyens (60) pour produire un état de vide prédéterminé à l'intérieur de ladite chambre d'essai (10) avant d'actionner les moyens d'échantillonnage et de mesure (66).

8. Appareil d'inspection (10) selon les revendications 6 ou 7, caractérisé en ce que les moyens d'échantillonnage et de mesure (66) sont un dispositif de détection de l'hélium (72) qui est calibré à un débit de fuite d'hélium connu, standard, positif.

9. Appareil d'inspection (10) selon les revendications 6, 7 ou 8, caractérisé par des moyens (20) pour transporter au moins une barre de combustible nucléaire (R) à la fois dans, à travers et hors de ladite chambre d'essai (16).

10. Appareil d'inspection (10) selon la revendication 9, caractérisé en ce que les moyens de transport (20) comprennent un premier transporteur (36) pour transporter la barre de combustible (R) dans ladite chambre (16), un deuxième transporteur (38) disposé à l'intérieur de la chambre d'essai (16) pour supporter la barre de combustible (R) dans ladite chambre d'essai (16) et pour la transporter à travers celle-ci, et un troisième transporteur (40) pour transporter la barre de combustible (R) hors de la chambre d'essai (16).

11. Appareil d'inspection (10) selon la revendication 10, caractérisé en ce que lesdits premier, second et troisième transporteurs (36, 38, 40) sont disposés bout à bout l'un par rapport à l'autre.

12. Appareil d'inspection (10) selon l'une quelconque des revendications 6 à 11, caractérisé en ce que la chambre d'essai (16) est une structure allongée présentant des extrémités opposées ouvertes dont chacune possède des moyens (18) associés pouvant être actionnés pour fermer et ouvrir les extrémités correspondantes de ladite chambre d'essai (16).

13. Appareil d'inspection (10) selon la revendication 12, caractérisé en ce que les moyens (18) pour ouvrir et fermer les extrémités de la chambre d'essai (16) comporte une paire de couvercles d'extrémité (22) couvrant de manière étanche lesdites extrémités opposées de ladite chambre d'essai (16), et des mécanismes (24) pouvant être actionnés pour déplacer lesdits couvercles d'extrémité (22) dans des positions ouvertes et fermées de ceux-ci par rapport aux extrémités respectives opposées de la chambre d'essai (16).

14. Appareil d'inspection (10) selon les revendications 12 ou 13, caractérisé par des moyens (48) pour purger ladite chambre d'essai (16) avec un gaz pré-sélectionné lorsque lesdites extrémités opposées de la chambre d'essai (16) sont ouvertes.
